# EUROPEAN PATENT APPLICATION

(11) **EP 4 819 042 A1**
(43) Date of publication of application: **07.10.2026**
(21) Application number: 26168390.8
(22) Date of filing: 27.03.2026
(51) Int. Cl.: G06T 7/292

(54) **MARKER-FREE MOVEMENT CAPTURE SYSTEM AND A METHOD FOR MEASURING MOVEMENT OF A GOLFER AND ASSOCIATED GOLF EQUIPMENT DURING A GOLF EXERCISE**

(30) Priority: 31.03.2025 EP 25167439
(71) Applicant: Elva Golf ehf., 210 Garðabær (IS)
(72) Inventor: Hjálmarsson, Helgi, 200 Kópavogur (IS); Ólafsson, Arnar Már, 104 Reykjavík (IS); Eiríksson, Grétar, 220 Hafnarfjörður (IS); Aðalsteinsson, Guðmundur Freyr, 221 Hafnarfjörður (IS); Rombouts, Jaldert Olaf, 203 Kópavogur (IS)
(74) Representative: Inspicos P/S

(57) **Abstract**

The present invention relates to a marker-free movement capture system and a method to measure movement of a golfer and associated golf equipment during a golf exercise, in which a golf ball is hit from a designated hitting area, including:
• a first and at least one second camera having an internal position relative to a reference area where the golf ball is to be hit such that the captured image data during the golf exercise meets a predefined calibration criterion, and
• a computer system configured to receive and process the image data from the first and the at least second camera.

The at least one of the cameras is configured to capture image data indicating the position of the golf ball, wherein the computer system is further configured to, prior to start measuring the movement of the golfer and the associated golf equipment, and in case the captured image data indicate a change in the golf ball's position compared to previous position:
∘ calculating a distance and/or an angular position between the reference area where the ball is to be hit and the at least one camera,
∘ determining if the calculated distance and/or the angular position exceeds a predefined distance and/or the angular position threshold where the predefined calibration criterion is not met,
∘ utilizing, in the case of exceeding the predefined distance and/or the angular position threshold, the calculated distance and/or the angular position as input data in adjusting the position of the first and the at least one second camera until the calculated distance and/or the angular position is within the predefined distance and/or the angular position threshold.

## Description

### FIELD OF THE INVENTION

The present invention relates to a marker-free movement capture system and a method to measure movement of a golfer and associated golf equipment during a golf exercise, in which a golf ball is hit from a designated hitting area.

### BACKGROUND OF THE INVENTION

Many professional and amateur golfers prefer practicing on natural grass rather than artificial mats, as it closely replicates real golf course conditions, including fairways, rough, and bunkers. Additionally, hitting from artificial mats can increase stress on a golfer's hands and body, leading to a higher risk of injuries, particularly during long training sessions. While golfers who have access to year-round outdoor practice areas can consistently train on natural grass, those in colder climates or restricted environments face greater challenges, especially when incorporating marker-less motion capture systems to analyze their swings.

A key issue with outdoor motion capture setups is the need for mobile camera systems or frequent repositioning as the grass wears down and golfers move to fresh hitting areas. Since a typical golf swing involves striking the ball first and then taking a divot, the turf progressively deteriorates, requiring rotation of hitting zones to allow the grass to recover. To maintain optimal surface conditions, practice areas undergo regular seeding, fertilization, and watering. However, these natural surface variations introduce inconsistencies in camera alignment and tracking accuracy, posing additional challenges for motion capture systems.

As a result, indoor golf using launch monitors has gained popularity, particularly in regions where weather conditions limit outdoor play for extended periods. One notable innovation in this space is the Tiger Golf League, which hosts indoor competitions in specially designed arenas where golfers hit from natural turf placed in designated boxes. This approach provides a more authentic playing experience, allowing golfers to train or compete in realistic conditions while maintaining consistent motion tracking. By simulating outdoor conditions in an indoor environment, such systems help bridge the gap between conventional outdoor practice and advanced motion capture technologies, ensuring a highly accurate and immersive golf training experience.

### SUMMARY OF THE INVENTION

The object of the present invention is to solve the technical challenges associated with implementing marker-less motion capture technology for accurately tracking a golfer's movement and the motion of associated equipment, including a golf club and a golf ball, during training in indoor closed booths, indoor open booths or outdoor golf booths.

One of the primary technical difficulties solved by the invention is ensuring the stability and accuracy of the motion capture system when golfers practice on natural grass, rough, or other uneven surfaces, which can lead to positional shifts, variations in stance, and require changes in camera alignment. These inconsistencies can introduce errors in tracking data and compromise the reliability of movement analysis.

To overcome these challenges, the invention provides a system and a method that maintains consistent and precise measurement of the golfer's movements while accommodating natural surface variations. The solution ensures that golfers can train in an environment that closely replicates real golf course conditions with exceptional ease of use and without sacrificing the accuracy of motion tracking.

In general, the invention preferably seeks to mitigate, alleviate or eliminate one or more of the above-mentioned disadvantages of the prior art singly or in any combination. In particular, it may be seen as an object of embodiments of the present invention to provide a system and a method that overcomes the above mentioned problems.

In a first aspect of the invention, a marker-free movement capture system is provided adapted to measure movement of a golfer and associated golf equipment during a golf exercise, where the system comprises:
- a first and at least one second camera having an internal position relative to a reference area where the golf ball is to be hit such that the captured image data during the golf exercise meets a predefined calibration criterion, and
- a computer system configured to receive and process the image data from the first and the at least second camera,

wherein at least one of the cameras is configured to capture image data indicating the position of the golf ball,
wherein the computer system is further configured to, prior to start measuring the movement of the golfer and the associated golf equipment, and in case the captured image data indicate a change in the golf ball's position compared to previous position:
   o calculating a distance and/or an angular position between the reference area where the ball is to be hit and the at least one camera,
   o determining if the calculated distance and/or an angular position exceeds a predefined distance and/or the angular position threshold where the predefined calibration criterion is not met,
   o utilizing, in the case of exceeding the predefined distance and/or the angular position threshold, the calculated distance and/or the angular position as input data in adjusting the position of the first and at least one second camera until the calculated distance and/or the angular position is within the predefined distance and/or the angular position threshold.

In an embodiment, the system is further configured to, subsequent to adjusting the position of at least one of the first and the at least one second cameras, to:
capture image data over a predefined time window encompassing both before and after the golfer hits the golf ball,
calculate the golfer's movement and the movement of associated golf equipment.

Accordingly, a system is provided for both indoor closed booths, indoor open booths or outdoor golf booths training environments, enabling year-round usability on natural surfaces. At the same time, it ensures a precise, marker-free tracking of a golfer's movement and equipment, thereby minimizing errors in motion analysis.

Moreover, the system is capable of automatically recalibrating new positions when deviations exceed predefined thresholds, ensuring consistent and accurate tracking without requiring manual intervention while at the same time maintaining precise movement measurement while adapting to natural surface variations, allowing golfers to train in an environment that closely replicates real golf course conditions without compromising motion tracking accuracy.

Further, by utilizing the captured image data collected over the predefined time window it is ensured that the system processes only the essential image data captured within a predefined time window, ensuring efficient use of processing power for movement analysis. The predefined time window may include time t1 before the action detected and t2 after the detected action, where the predefined time window is t=t1+t2, where t1 may be equal to t2, or where t1 may be non-equal to t2.

The change in the golf ball's position relative to its previous location may result from various factors. For instance, the golfer might manually adjust the ball's placement, or the golf ball feeder could dispense a new ball at a slightly different spot. Other potential causes include external disturbances, such as wind or vibrations affecting the ball's position, or variations in the surface where the ball lands, leading to slight deviations.

Moreover, the term "change" may preferably be understood as if the change in the position exceeds a pre-defined distance limit, e.g. 5cm, or 10cm, whereas a few millimeters change might not be understood as a change.

The computer system may, for example, encompass various types of computing devices, including both stationary and portable units. This includes, but is not limited to, desktop computers, laptops, tablets, embedded systems, and other computational hardware. The system is equipped with a processor for executing instructions, a memory unit for storing data and programs, and the necessary hardware components required to process the aforementioned image data. These components may include specialized processors such as GPUs (Graphics Processing Units) or NPUs (Neural Processing Units) for accelerated image processing, as well as storage devices and input/output interfaces essential for handling and analyzing image data efficiently.

The computing devices can both be stored in the vicinity of the training booth and/or remotely where Ethernet or compatible technology will be used to transfer data to the computers. The communication between the devices can either be with wires or wireless.

The term capture image data may according to the present invention be understood as a process of recording digital image data by acquiring a series of images preferably at high frequency (i.e., a high number of frames per second). This high-frequency capturing enables as an example the creation of a highly accurate and detailed video file, allowing precise visualization and analysis of fast-moving objects or events. The captured image data typically consists of sequential frames that, when combined, form a continuous representation of motion, ensuring smooth playback and reliable data for applications such as motion tracking and video analysis. Data capturing at high frequency further enables not only accurate calculation of movement but also of speed and acceleration of the movements.

In an embodiment, the system further comprises an actuator system, operated by the computer system, to which the first and the at least one second cameras are connected to,
wherein adjusting the position of the first and the at least one second camera by the computer system includes instructing the actuator system to adjust the position of the cameras until the calculated distance and/or the angular position is within the predefined distance and/or the angular position threshold.

Through the actuator system, the cameras position is automatically adjusted, in response to positional deviations, ensuring uninterrupted and consistently precise motion capture. The system's reliability, usability, and technical robustness is thus enhanced, ensuring precise motion tracking under real-world golfing conditions while reducing operational complexity.

In an embodiment, the system further comprises a frame structure in which the golf player performs the golf exercise to which the first and the at least one second cameras are attached to, where the frame structure is mechanically connected to the actuator system, where the actuator is configured to, in response to the instructions from the computer system, to adjust linear and/or angular position of the frame structure or a part of the frame structure containing at least one of the camera(s) until the calculated distance and/or the angular position is within the predefined distance and/or the angular position threshold.

By adjusting the entire frame structure or the part of the frame structure, rather than just the cameras, misalignments caused by uneven surfaces or golfer movement are minimized, improving long-term measurement precision. Also, the actuator system enables real-time linear and/or angular adjustments, allowing the system to maintain precise calibration even if the golfer moves within the training area or if the surface conditions change (e.g., due to divot formation). Further, the automated frame repositioning eliminates the need for frequent recalibrations, reducing downtime and allowing golfers to focus on their training while ensuring that motion capture data remains consistently accurate.

In another alternative embodiment, the first and the at least one second cameras are arranged to be in a fixed position relative to the frame structure.

In an embodiment, prior to hitting the golf ball a gesture action is performed by the golfer signaling the golfer's intention to strike the golf ball, where the at least one camera is configured to detect the gesture signal, where the computer system is triggered, in response to the detected gesture signal, to capture image data over the predefined time window encompassing both before and after the golfer hits the golf ball. In an embodiment, the golfer may be notified with a sound or by visual feedback that the system is ready for the golf ball to be hit.

By detecting the golfer's gesture signal, the system is proactively signaled when the golfer intends to hit the next golf ball. By detecting the golfer's gesture, the camera system is triggered to capture the image data over the predefined time window, ensuring that critical moments before and after impact are recorded with precision, thus improving the accuracy of movement/swing analysis, ball tracking, and shot evaluation by aligning data collection with the golfer's intentional movements.

In an embodiment, the reference area is placed within a designated hitting area having a size, and/or shape designed such that the predefined calibration criterion is met while the golf ball is struck within the designated hitting area.

The designated hitting area can be made visible to the golfer by utilizing lighting that trace the boundaries of the area at sufficiently fast pace such that it appears to be completely lit up. Alternatively, the corner points of the area could be lit up.

The designated hitting area may in an alternative embodiment contain a surface structure or a subset of the surface structures containing a natural gras as a surface area, where the surface structure(s) is/are designed to be replaced, e.g. after performing a golf exercise where a number of divots have been formed, with another surface structure containing fresh natural gras free of divots, such as manually or automatically.

In an embodiment, the system further comprises a training platform structure, on which the designated hitting area is resting, for supporting the golf ball that is to be hit and potentially the golfer during the golf exercise, where the training platform structure is mounted to an angular adjustment device, operated by the computer system, configured to adjust the angular position of the designated hitting area, where the distance and/or the angular position between the reference area where the ball is to be hit and the camera is caused by the angular position adjustment of the training platform structure during the golf exercise.

The ability of the training platform structure to tilt enables the simulation of various terrain conditions found on an actual golf course, such as sloped fairways or bunker shots, creating a more natural and realistic golf exercise. By dynamically adjusting its angular position based on system inputs, the platform enhances both the realism and accuracy of golf training while ensuring optimal calibration for motion capture. This adjustability not only improves the simulation of diverse course conditions but also maintains the distance and angle between the designated hitting area and the at least one camera within predefined calibration thresholds, thereby enhancing motion tracking accuracy without requiring manual intervention

In an alternative embodiment, the adjustment in the angular position is triggered in response to a calculated location data of an area where the golf ball would land based on evaluation of the ball flight, where the location area is within an actual or artificial golf field, where the location data have associated angular position data indicating an angular position of the area where the golf ball landed, wherein the adjusted angular position of the training platform structure is based on the associated angular position data.

By dynamically altering the platform angle, golfers can practice shots under variable course conditions, improving their ability to adapt to different terrains while ensuring accurate biomechanical analysis of their swings.

To ensure the accuracy of the detection of the action, high-speed digital camera(s) may be employed capable of capturing a rapid sequence of images, allowing for precise tracking of the golf ball's movement before, during, and immediately after the strike. By leveraging this high frame rate, the system can reliably identify the exact moment when the ball leaves the field of view, ensuring that the detected action aligns closely with the golfer's strike. This approach is particularly effective in scenarios requiring high precision, such as analyzing the dynamics of a golf swing or optimizing performance in a simulated or natural environment.

The cameras may include cameras that cater to various use cases, from analyzing fast-moving events capable of recording at extremely high frame rates, to capturing exceptionally detailed images and videos, just to mention a few examples.

In an embodiment, in case the reference area where the golf ball is to be hit is not visible by the at least one camera, the reference area is replaced by a new reference area on the golfer and/or on the golf equipment.

Thus, a continuous and reliable tracking of the golfer's swing and ball position is ensured, even when the primary reference area where the golf ball is located becomes obscured. By dynamically replacing the reference area with an alternative location on the golfer or golf equipment, the system maintains accurate motion detection and data capture without interruption.

This adaptability is particularly beneficial in various scenarios where the golf ball may become temporarily invisible to the camera. For instance, high grass could partially or fully cover the ball, making direct visual tracking difficult. Similarly, the golfer's posture such as bending too far forward or an obstructive arm or club position may block the camera's line of sight. Additionally, environmental factors like uneven terrain or shadows cast by objects or the golfer can also obscure the ball.

By allowing the system to shift focus to a secondary reference point, such as a marker on the golfer's clothing, club, or glove, the robustness and reliability of the system is enhanced, ensuring that critical tracking data may still bel gathered even when direct visibility of the golf ball is compromised, thus improving the accuracy of swing analysis, shot assessment, and training feedback.

The term golf training booth may according to the present invention be understood as any space of sufficient size where a golfer can practice golf. It may consist of some structure in the vicinity of the golfer at which for example the desired cameras, lighting or obstruction for sun light can be mounted. The golf training booth may be fully indoor, indoor but partially open always or just during a golf exercise or outside.

In a second aspect of the invention, a method is provided of operating a marker-free movement capture system adapted to measure movement of a golfer and associated golf equipment during a golf exercise, where the system includes:
o a first and at least one second camera having an internal position relative to a reference area where the golf ball is to be hit such that the captured image data during the golf exercise meets a predefined calibration criterion, and
o a computer system configured to receive and process the image data from the first and the at least second camera,
wherein the method comprises, prior to start measuring the movement of the golfer and the associated golf equipment:
- receiving image data captured by at least one of the cameras indicating the position of the golf ball, where in case the captured image data indicate a change in the golf ball's position compared to previous position,,
- calculating a distance and/or an angular position between the reference area where the ball is to be hit and the at least one camera,
- determining if the calculated distance and/or the angular position exceeds a predefined distance and/or the angular position threshold where the predefined calibration criterion is not met,
- utilizing, in the case of exceeding the predefined distance and/or the angular position threshold, the calculated distance and/or the angular position as input data in adjusting the position of the first and at least one second cameras until the calculated distance and/or the angular position is within the predefined distance and/or the angular position threshold.

In an embodiment, the method further comprises, subsequent to adjusting the position of at least one of the first and the at least one second cameras, capturing image data over a predefined time window encompassing both before and after the golfer hits the golf ball, to calculate the golfer's movement and the movement of associated golf equipment.

In an embodiment, the step of adjusting the position of the first and the at least one second cameras where the golf ball is to be hit is performed automatically. The golfer's action may in an alternative embodiment include manually repositioning the golf ball within a designated golf patch inside the training structure, the golf patch comprising a natural surface area selected from fairway-type grass, rough-type grass, or sand.

The designated golf patch may be integrated into a training platform structure designed to support the golf ball to be struck and, optionally, the golfer during the golf exercise.

In an embodiment, the method further comprises adjusting an angular position of the training platform structure, where the distance and/or the angular position between the reference area where the ball is to be hit, and the camera, is caused by the angular position adjustment of the training platform structure during the golf exercise.

In the virtual training environment the training platform may be located within an actual golf field or an artificial golf field, and the adjustment of the angular position is triggered based on a calculated location data indicating where the golf ball would land based on evaluation of the ball flight, the location data including associated angular position data corresponding to the landing area, where the training platform structure's adjusted angular position is determined based on this angular position data.

In an embodiment, the method further comprises calibrating the cameras, which includes one or more of:
- performing an intrinsic calibration,
- performing an extrinsic calibration,
- using charuco boards when making the calibration.

Charuco boards are commonly used when calibrating cameras used to obtain accurate 3D measurements of objects and as well in golf booths. Similar calibration may be repeated on the first camera and the at least one second camera within the first natural field space, such as using again such charuco boards or similar means that are useful in calibrating the cameras. This ensured high accuracy and quality in the movement measurement.

Intrinsic calibration focuses typically on the camera's internal properties, such as focal length, principal point, and lens distortion, to correct image distortions and map 3D points to the camera's 2D image plane, whereas the extrinsic calibration determines the camera's position and orientation relative to an external coordinate system or other cameras, enabling spatial alignment for tasks like 3D reconstruction or multi-camera setups.

Together, these calibrations ensure accurate imaging and precise spatial mapping for applications such as robotics, motion tracking, and augmented reality.

In an embodiment, the method further comprises:
- detecting a gesture action from the golfer, prior to hitting the golf ball, signaling the golfer's intention to strike the golf ball, and in response to the detected gesture action,
- capturing image data over the predefined time window encompassing both before and after the golfer hits the golf ball in response to the detected gesture signal,
- utilizing the captured image data in measuring the movement of the golfer and the associated golf equipment during a golf exercise.

In an embodiment, the designated golf patch is integrated into a training platform structure configured to support the golf ball to be struck and, optionally, the golfer during the golf exercise, wherein the method further comprises:
- adjusting an angular position of the training platform structure, such that a distance and/or the angular position between the reference area, at which the golf ball is to be struck , and the camera is changed by the adjustment of the angular position of the training platform structure during the golf exercise,

wherein the training platform structure is located within, or is configured to reproduce conditions of, an actual golf field or an artificial golf field; and
wherein the adjustment of the angular position is triggered based on location data indicating an area in which the golf ball lands, the location data being associated with angular position data corresponding to that area of the golf field.

This embodiment provides a technical advantage in that it enables the training platform to reproduce, in a physically controlled manner, the angular lie conditions associated with the area of the golf course where the previously struck ball would have landed. By using landing-area location data linked to corresponding angular position data of the actual or artificial golf field, the method automatically adjusts the angular position of the platform so that the spatial relationship between the ball-support area and the camera changes in accordance with the mapped terrain. This allows the golfer to perform successive shots from lie conditions that more faithfully reflect real on-course play, thereby improving realism, training accuracy, and repeatability compared with static indoor golf systems or systems that rely only on manually selected incline settings.

In general, the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Figures 1 and 2 show a marker-free movement capture system adapted to measure movement of a golfer and associated golf equipment,
Figure 3 illustrates an embodiment in which a golfer interacts with the system according to the present invention by repositioning a golf ball on a natural surface, such as a grass patch,
Figure 4 provides a detailed illustration of a scenario associated with the moment a golfer (not shown) strikes the golf ball using a golf club,
Figure 5 illustrates a scenario, where the actuator system is mechanically connected to a frame structure in which the golf player performs the golf exercise on a reference area within a designated hitting area,
Figure 6 illustrates an exemplary embodiment of the system according to the present invention, where the actuator system discussed previously comprises a robotic arm, and
Figure 7 shows a flowchart of a method according to the present invention of operating a marker-free movement capture system adapted to measure movement of a golfer and associated golf equipment during a golf exercise.

### DESCRIPTION OF EMBODIMENTS

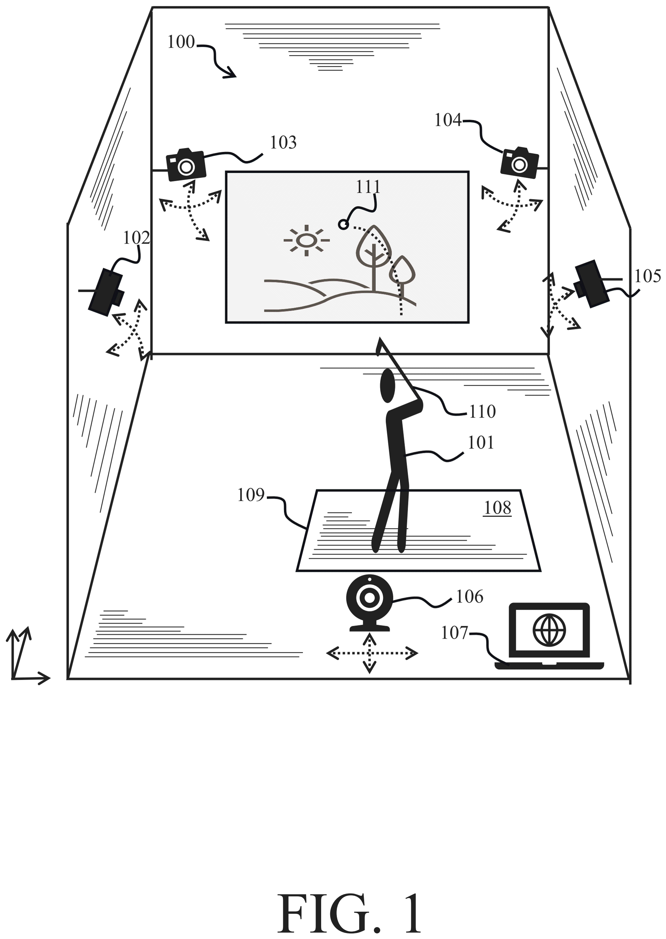

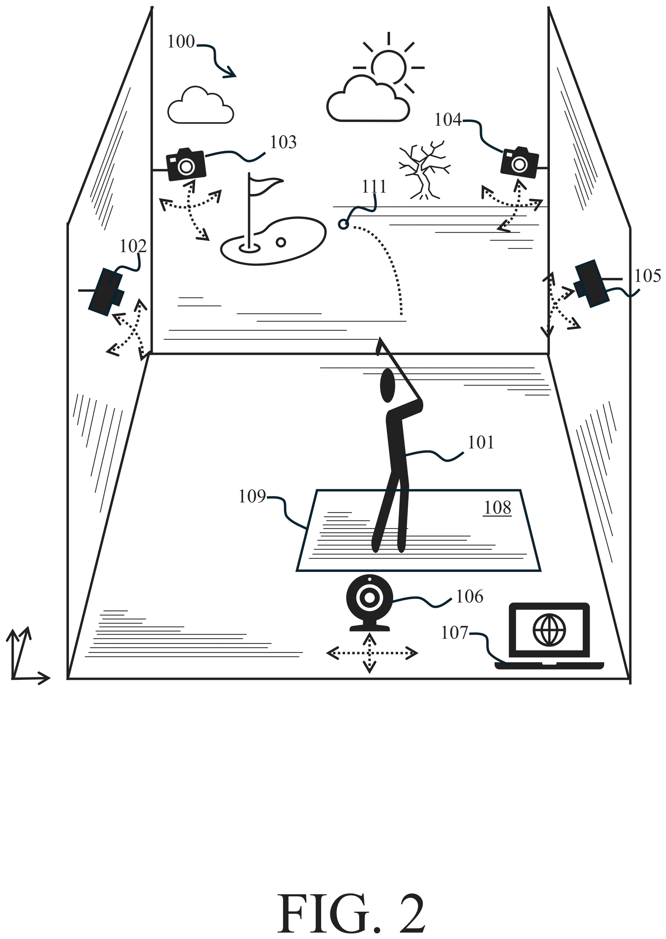

Figures 1 and 2 show a marker-free movement capture system 100 adapted to measure movement of a golfer 101 and associated golf equipment 110, a golf ball 111 and a golf club 110, during a golf exercise, in which the golf ball 111 is hit from a reference area, which in this embodiment is placed within a designated hitting area 108 defined via boundaries 109.

Figure 1 illustrates and indoor training environment and figures 2 illustrates an outdoor training environment for the same system 100.

The system comprises five cameras 102-106, a computer system 107, which may have an internal position relative to a designated hitting area 108 where the golf ball is to be hit, such that the captured image data when the golf exercise starts meets a predefined calibration criterion while the golf ball is hit within this area. The number of cameras should of course not be construed to be limited to five, but the number could just as well be less or more than five cameras.

Before starting measuring the movement of the golfer and the associated golf equipment the computer system 107 receives and processes the image data, e.g. via wired or wireless communication, from at least one of the cameras, where the image data indicates the position of the golf ball.

The computer system 107 is further configured to, in case the processed image data indicates that the golf ball's position has changed compared to previous position, to process the received image data from the cameras 102-106, in calculating a distance and/or an angular position between the reference area where the ball is to be hit and the at least one camera. The calculation includes determining if the calculated distance and/or the angular position exceeds a predefined distance and/or the angular position threshold where the predefined calibration criterion is not met.

The computer system is further configured to utilize, in the case of exceeding the predefined distance and/or the angular position threshold, the calculated distance and/or the angular position as input data in adjusting the relative position of the cameras 102-106.

The camera's adjustment be as an example be as indicated by the dotted arrows, e.g. angular and/or linear adjustments, which may be performed via an actuator system (not shown), until the calculated distance and/or the angular position is within the predefined distance and/or the angular position threshold.

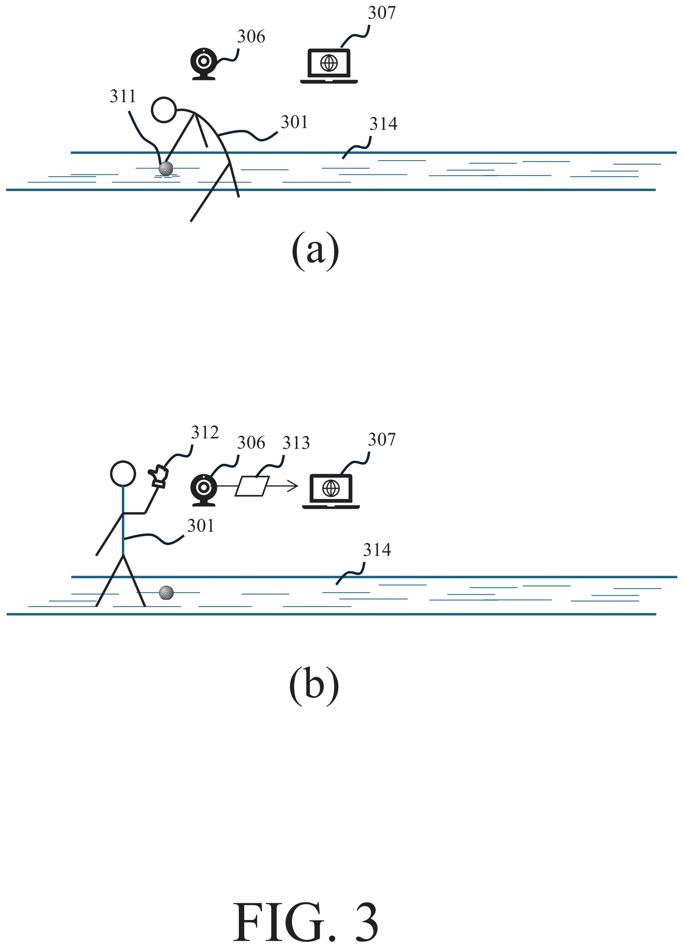

Figure 3 illustrates an exemplary embodiment in which a golfer 301 interacts with the system of the present invention by repositioning a golf ball 311 on a natural surface 314, such as a grass patch, as depicted in Figure 3a. This repositioning allows the golfer to select a preferred starting position for the next stroke.

After adjusting the ball's position, the golfer then performs a gesture action 312, such as a deliberate hand movement, which serves as an intentional signal indicating their readiness to strike the next golf ball from the newly chosen location.

A camera 306 (or multiple cameras, if applicable) is configured to detect this gesture signal 313 prior to the golfer making contact with the ball. This signal functions as a preparatory indication, confirming the golfer's intention to proceed with the stroke, as illustrated in Figure 3b.

Upon detecting the gesture signal 313, the computer system 307 is triggered to initiate image capture over a predefined time window. This time window is designed to encompass both the moments before and after the golfer executes the stroke, ensuring that the system records all relevant motion data associated with the golfer's action and ball trajectory.

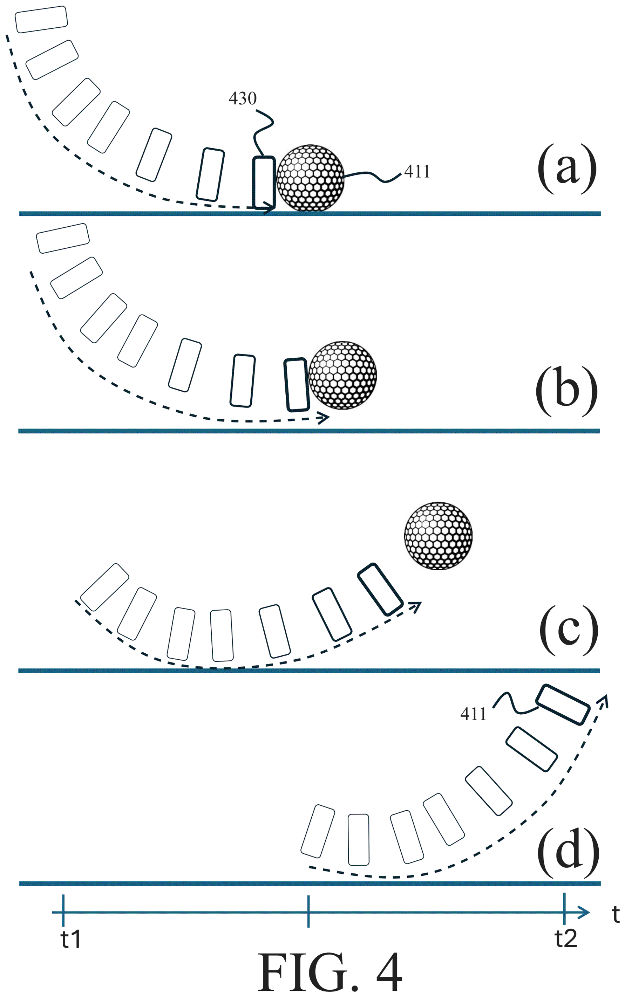

Figure 4 provides a graphical representation of this process, illustrating the timeframe from t₁ to t₂, during which image capture occurs. The capture begins at t₁, precisely when the golfer (not shown) strikes the golf ball 411 with a golf club 430. The specific type of golf club used-whether a driver, iron, or putter-depends on the nature of the shot being practiced or executed.

Detection of the stroke identifies the exact moment of impact by recognizing when the ball disappears from the captured image frames, indicating that it has been struck and is in motion. This disappearance serves as a clear triggering event, ensuring accurate and timely recording of the golfer's actions.

To ensure the accuracy of this detection, high-speed digital cameras may be employed. These cameras are capable of capturing a rapid sequence of images, allowing for precise tracking of the golf ball's movement before, during, and immediately after the strike. By leveraging this high frame rate, the system can reliably identify the exact moment when the ball leaves the field of view, ensuring that the detected action aligns closely with the golfer's strike. This approach is particularly effective in scenarios requiring high precision, such as analyzing the dynamics of a golf swing or optimizing performance in a simulated or natural environment.

The predefined time window may include time t1 before the action detected and t2 after the detected action, where the predefined time window is t=t1+t2.

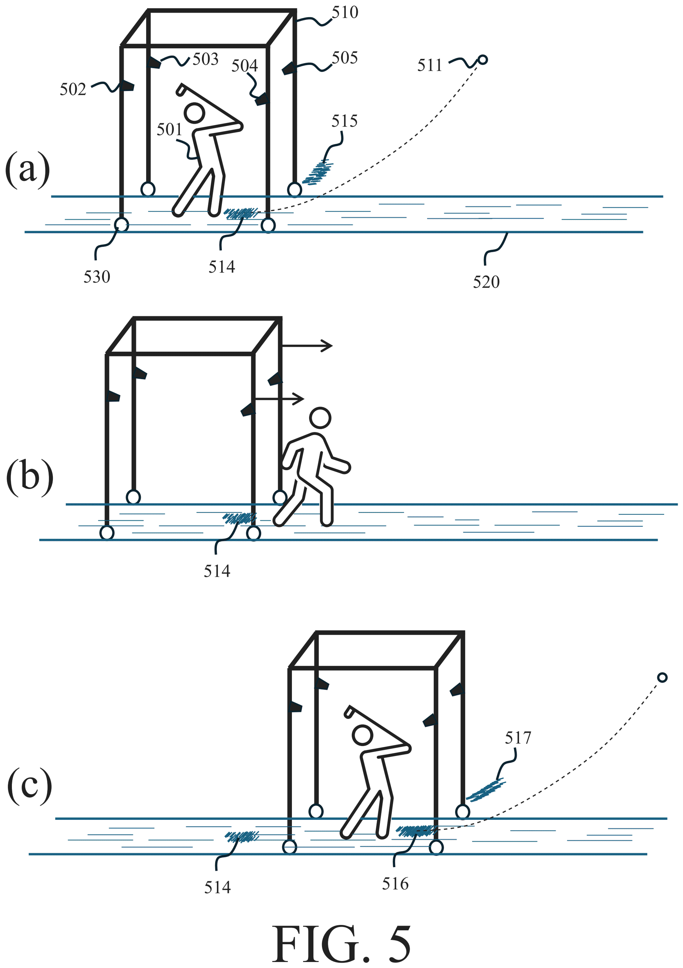

Figure 5 illustrates a scenario, where the actuator system is mechanically connected to a frame structure 510 in which the golf player performs the golf exercise on a reference area within a designated hitting area 520, which in this case contains a natural grass as a surface structure. Four cameras 502-505 are attached to the frame structure. This should of course not be construed as being limited to four cameras, the number may just as well be less than four, or more the four cameras.

Figure 5a illustrates a scenario in which the golfer 501 strikes a golf ball 511 on the natural grass surface, resulting in the formation of a divot 514, 515. Following this, as shown in Figure 5b, the golfer moves to a new, divot-free area to prepare for the next shot.

To accommodate this movement, the frame structure 510 is advanced linearly via an actuator system. This actuator may incorporate various types of driving mechanisms, which can be integrated into one or more of the wheels 530 or a rail-based structure (not shown). As the golfer transitions from the initial position in Figure 5a to the new position in Figure 5c, the actuator system automatically moves the frame structure accordingly, where the step shown in figure 5a is repeated with possible new divot formations 516, 517.

By adjusting the entire frame structure, rather than just the cameras, misalignments caused by uneven surfaces or golfer's movement are minimized, improving long-term measurement precision. Also, the actuator system enables real-time linear (and even also an angular) adjustment, allowing the system to maintain precise calibration even if the golfer moves within the training area or if the surface conditions change (e.g., due to divot formation). Further, the automated frame repositioning eliminates the need for frequent recalibrations, reducing downtime and allowing golfers to focus on their training while ensuring that motion capture data remains consistently accurate.

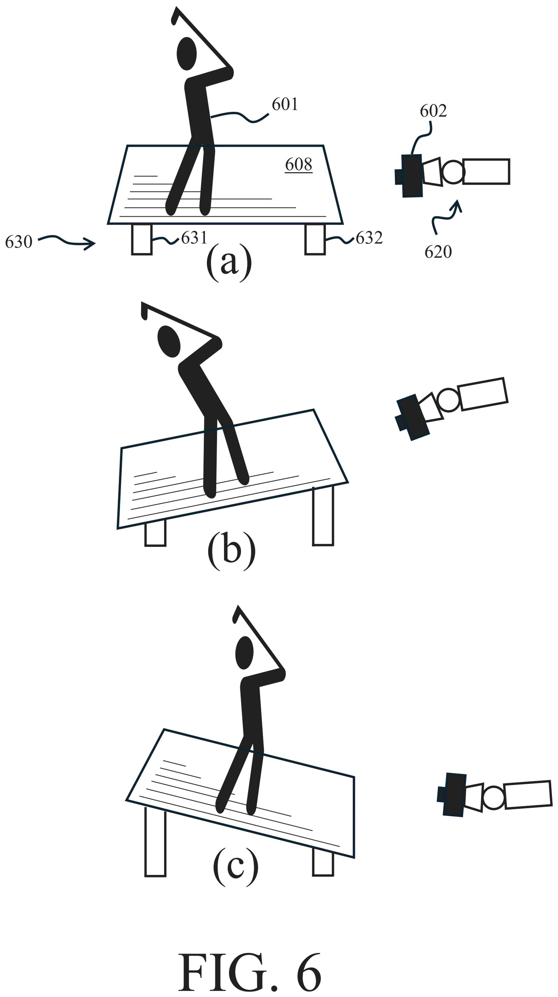

Figure 6 illustrates an exemplary embodiment of the system according to the present invention, where the actuator system discussed previously comprises a robotic arm 620, to which at least one of the cameras 602 discussed previously is attached to and serves as a mounting platform for the at least one of the cameras 602 discussed earlier, allowing for dynamic adjustments in camera positioning to optimize viewing angles, tracking accuracy, and data collection during the golfer's swing.

Moreover, the golfer 601 shown here is standing on a designated hitting area 608, which may be similar as discussed in figure 1.

The designated hitting area may be supported by a training platform structure 630, that as shown here may comprise multiple of legs 631, 632 having adjustable heights, configured to adjust the angular position of the designated hitting area 608 as shown in figures 6b,c, which may be similar to the one described in Figure 1, provides a stable surface for executing various golf strokes while interacting with the system.

In an alternative embodiment, and as discussed previously, this angular adjustment may be triggered in response to a calculated location data of an area where the golf ball would land based on evaluation of the ball flight, where the location area is within an actual or artificial golf field. The location data have associated angular position data indicating an angular position of the area where the golf ball landed, wherein the adjusted angular position of the training platform structure is based on the associated angular position data.

The training platform structure 630 is designed to enhance versatility and adaptability in training conditions is designed to modify the height and angular position of the hitting area, which allows golfers to simulate different terrain conditions, such as uphill, downhill, or sidehill lies, for a more comprehensive training experience. The adjustability mechanism, as demonstrated in Figures 6b and 6c, enables precise inclination control, helping golfers refine their technique under varied playing conditions.

In an alternative embodiment, the angular adjustment of the training platform may be dynamically triggered in response to the above mentioned calculated location data that identifies where the golf ball would land based on an evaluation of its flight path, where as discussed could be within an actual or artificial golf field, enabling real-time simulation of different course conditions, where the system retrieves associated angular position data corresponding to the landing area, which defines the slope or tilt at that location. The training platform then adjusts its angular position accordingly, ensuring that the golfer practices their next stroke under terrain conditions that match the real-world landing area.

To better illustrate this embodiment, certain components of the surface structure, e.g. natural grass, around the designated hitting area have been omitted from the figure. This omission provides a clearer view of the angular adjustment mechanism, showcasing how the training platform's orientation can be customized to meet specific training objectives.

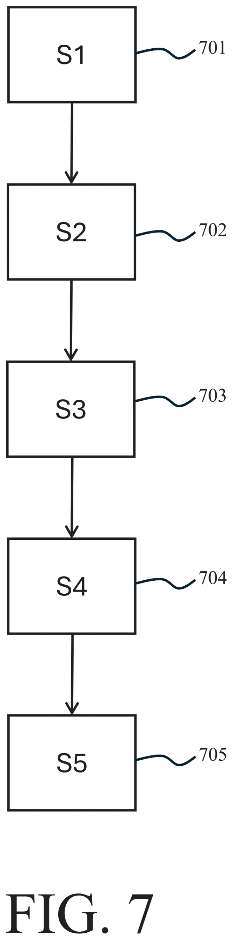

Figure 7 shows a flowchart of a method according to the present invention of operating a marker-free movement capture system adapted to measure movement of a golfer and associated golf equipment during a golf exercise.

As discussed previously, the marker-free movement capture system includes a first and at least one second camera having an internal position relative to a reference area where the golf ball is to be hit such that the captured image data during the golf exercise meets a predefined calibration criterion, and a computer system configured to receive and process the image data from the first and the at least second camera.

In a first step (S1) 701, prior to start measuring the movement of the golfer and the associated golf equipment, image data are received captured by at least one of the cameras indicating the position of the golf ball, where in case the captured image data indicate a change in the golf ball's position compared to previous position.

In a second step (S2) 702, a distance and/or an angular position is calculated between the reference area where the ball is to be hit and the at least one camera.

In a third step (S3) 703, it is determined if the calculated distance and/or the angular position exceeds a predefined distance and/or the angular position threshold where the predefined calibration criterion is not met.

In a fourth step (S4) 704, in the case of exceeding the predefined distance and/or the angular position threshold, the calculated distance and/or the angular position is utilized as input data in adjusting the position of the first and at least one second cameras until the calculated distance and/or the angular position is within the predefined distance and/or the angular position threshold.

In a fifth step (S5) 705, subsequent to adjusting the position of at least one of the first and the at least one second cameras, image data is captured over a predefined time window encompassing both before and after the golfer hits the golf ball, to calculate the golfer's movement and the movement of associated golf equipment. This image capturing is preferably performed from t₁ to t₂, where the image capture begins at t₁, shortly before the golfer strikes the golf ball until shortly after the golf ball has been hit.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. **A marker-free** movement capture system adapted to measure movement of a golfer and associated golf equipment during a golf exercise, where the system comprises:
• a first and at least one second camera having an internal position relative to a reference area where the golf ball is to be hit such that the captured image data during the golf exercise meets a predefined calibration criterion, and
• a computer system configured to receive and process the image data from the first and the at least second camera,
wherein at least one of the cameras is configured to capture image data indicating the position of the golf ball,
wherein the computer system is further configured to, prior to start measuring the movement of the golfer and the associated golf equipment, and in case the captured image data indicate a change in the golf ball's position compared to previous position:
o calculating a distance and/or an angular position between the reference area where the ball is to be hit and the at least one camera,
o determining if the calculated distance and/or the angular position exceeds a predefined distance and/or the angular position threshold where the predefined calibration criterion is not met,
o utilizing, in the case of exceeding the predefined distance and/or the angular position threshold, the calculated distance and/or the angular position as input data in adjusting the position of the first and the at least one second camera until the calculated distance and/or the angular position is within the predefined distance and/or the angular position threshold.

2. The system according to claim 1, wherein the system is further configured to, subsequent to adjusting the position of at least one of the first and the at least one second cameras, to:
capture image data over a predefined time window encompassing both before and after the golfer hits the golf ball,
calculate the golfer's movement and the movement of associated golf equipment.

3. The system according to claim 1 or 2, further comprising an actuator system, operated by the computer system, to which the first and the at least one second cameras are connected to,
wherein adjusting the position of the first and the at least one second camera by the computer system includes instructing the actuator system to adjust the position of cameras until the calculated distance and/or the angular position is within the predefined distance and/or the angular position threshold.

4. The system according to claim 3, further comprising a frame structure in which the golf player performs the golf exercise to which the first and the at least one second cameras are attached to, where the frame structure is mechanically connected to the actuator system, where the actuator is configured to, in response to the instructions from the computer system, to adjust linear and/or angular position of the frame structure or a part of the frame structure containing at least one of the camera(s) until the calculated distance and/or the angular position is within the predefined distance and/or the angular position threshold.

5. The system according to any of the claims 2 to 4, wherein prior to hitting the golf ball, a gesture action is performed by the golfer signaling the golfer's intention to strike the golf ball, where the at least one camera is configured to detect the gesture signal, where the computer system is triggered, in response to the detected gesture signal, to capture image data over the predefined time window encompassing both before and after the golfer hits the golf ball.

6. The system according to any of the preceding claims, wherein the reference area is placed within a designated hitting area having a size, and/or shape designed such that the predefined calibration criterion is met while the golf ball is struck within the designated hitting area.

7. The system according to claim 6, wherein the designated hitting area contains a surface structure containing a natural gras as a surface area, where the surface structure is designed to be replaced, e.g. after performing a golf exercise where a number of divots have been formed, with another surface structure containing fresh natural gras free of divots, such as manually or automatically.

8. **The system** according to any of the preceding claims, further comprising a training platform structure, on which the designated hitting area is resting, for supporting the golf ball that is to be hit and potentially the golfer during the golf exercise, where the training platform structure is mounted to an angular adjustment device, operated by the computer system, configured to adjust the angular position of the designated hitting area, where the distance and/or the angular position between the reference area where the ball is to be hit and the camera is caused by the angular position adjustment of the training platform structure during the golf exercise.

9. The system according to claim 8, wherein the adjustment in the angular position is triggered in response to a calculated location data of an area where the golf ball would land based on evaluation of the ball flight, where the location area is within an actual or artificial golf field, where the location data have associated angular position data indicating an angular position of the area where the golf ball landed, wherein the adjusted angular position of the training platform structure is based on the associated angular position data.

10. The system according to any of the preceding claims, wherein, in case the reference area where the golf ball is to be hit is not visible by the at least one camera, the reference area is replaced by a new reference area on the golfer and/or on the golf equipment.

11. A method of operating a marker-free movement capture system adapted to measure movement of a golfer and associated golf equipment during a golf exercise, where the system includes:
o a first and at least one second camera having an internal position relative to a reference area where the golf ball is to be hit such that the captured image data during the golf exercise meets a predefined calibration criterion, and
o a computer system configured to receive and process the image data from the first and the at least second camera,
wherein the method comprises, prior to start measuring the movement of the golfer and the associated golf equipment:
• receiving image data captured by at least one of the cameras indicating the position of the golf ball, where in case the captured image data indicate a change in the golf ball's position compared to previous position,
• calculating a distance and/or an angular position between the reference area where the ball is to be hit and the at least one camera,
• determining if the calculated distance and/or the angular position exceeds a predefined distance and/or the angular position threshold where the predefined calibration criterion is not met,
• utilizing, in the case of exceeding the predefined distance and/or the angular position threshold, the calculated distance and/or the angular position as input data in adjusting the position of the first and at least one second cameras until the calculated distance and/or the angular position is within the predefined distance and/or the angular position threshold.

12. The method according to claim 11, further comprising, subsequent to adjusting the position of at least one of the first and the at least one second cameras, capturing image data over a predefined time window encompassing both before and after the golfer hits the golf ball, to calculate the golfer's movement and the movement of associated golf equipment.

13. The method according to claim 11 or 12, wherein the change in the golf ball's position compared to previous position is due to manually or automatically repositioning the golf ball within a designated golf patch inside the training structure, the golf patch comprising a natural surface area selected from fairway-type grass, rough-type grass, or sand.

14. The method according to any of the claims 11 to 13, further comprising:
• detecting a gesture action from the golfer, prior to hitting the golf ball, signaling the golfer's intention to strike the golf ball, and in response to the detected gesture action,
• capturing image data over the predefined time window encompassing both before and after the golfer hits the golf ball in response to the detected gesture signal,
• utilizing the captured image data in measuring the movement of the golfer and the associated golf equipment during a golf exercise.

15. The method according to claim 13 or 14, wherein the designated golf patch is integrated into a training platform structure configured to support the golf ball to be struck and, optionally, the golfer during the golf exercise, wherein the method further comprises:
• adjusting an angular position of the training platform structure, such that a distance and/or the angular position between the reference area, at which the golf ball is to be struck , and the camera is changed by the adjustment of the angular position of the training platform structure during the golf exercise,
wherein the training platform structure is located within, or is configured to reproduce conditions of, an actual golf field or an artificial golf field; and
wherein the adjustment of the angular position is triggered based on location data indicating an area in which the golf ball lands, the location data being associated with angular position data corresponding to that area of the golf field.
